(19) Europäisches Patentamt
European Patent Office
Office européen des brevets

(11) **EP 1 038 190 B1**

(12) **EUROPEAN PATENT SPECIFICATION**

(45) Date of publication and mention
of the grant of the patent:
**09.02.2005 Bulletin 2005/06**

(21) Application number: **98961286.6**

(22) Date of filing: **11.12.1998**

(51) Int Cl.$^7$: **G01T 3/00**

(86) International application number:
**PCT/GB1998/003656**

(87) International publication number:
**WO 1999/031527 (24.06.1999 Gazette 1999/25)**

(54) **MONITORING A SAMPLE CONTAINING A NEUTRON SOURCE**

ÜBERWACHUNG EINER PROBE, DIE EINE NEUTRONENQUELLE ENTHÄLT

SURVEILLANCE D'UN ECHANTILLON CONTENANT UNE SOURCE DE NEUTRONS

(84) Designated Contracting States:
**BE DE FR GB IT**

(30) Priority: **12.12.1997 GB 9726270**
**15.05.1998 GB 9810433**

(43) Date of publication of application:
**27.09.2000 Bulletin 2000/39**

(73) Proprietor: **British Nuclear Fuels PLC**
**Warrington, Cheshire WA3 6AS (GB)**

(72) Inventors:
• **RONALDSON, John Paul,**
**BNFL Instruments Limited**
**Calderbridge, Cumbria CA20 1DB (GB)**
• **SHARPE, Robert Jonathan,**
**BNFL Instruments Limited**
**Calderbridge, Cumbria CA20 1DB (GB)**

(74) Representative: **Pawlyn, Anthony Neil**
**Urquhart-Dykes & Lord LLP**
**Tower North Central**
**Merrion Way**
**Leeds LS2 8PA (GB)**

(56) References cited:
• **WACHTER J R ET AL: "Prototype fast neutron counter for the assay of impure plutonium" AMERICAN NUCLEAR SOCIETY 3RD INTERNATIONAL CONFERENCE ON FACILITY OPERATIONS-SAFEGUARDS INTERFACE (PAPERS IN SUMMARY FORM ONLY RECEIVED), SAN DIEGO, CA, USA, 29 NOV.-4 DEC. 1987, vol. 55, suppl.1, pages 30-32, XP002098183 ISSN 0003-018X, Transactions of the American Nuclear Society, 1987, USA**

**Description**

This invention is concerned with improvements in and relating to monitoring, in particular, but not exclusively, monitoring of nuclear materials.

Monitoring of nuclear waste, and plutonium waste in particular, is important both for accountancy purposes and in ensuring that criticality safety standards are maintained. It is important to maintain an inventory of the plutonium in a plant and during disposal, for instance, to know the exact amount of plutonium in a given volume of waste.

Determination of the mass of plutonium in a waste sample is presently conducted using neutron coincidence counting (NCC), as described in the article "Prototype Fast Neutron Counter for the Assay of Impure Plutonium", J.R. Wachter, E.L. Adams, N. Ensslin, Transactions of the American Nuclear Society, 1987, USA, pages 30-32. On occasions it is necessary to supplement these investigations with high resolution gamma spectrometry measurement to check the validity of assumptions on the isotopic make up of the sample. For waste samples such as drums, boxes and other handleable packages a detection chamber is normally constructed into which the samples to be measured are introduced.

The detection chamber principally consists of a series of neutron detecting tubes placed in a polyethylene moderating material. The signals produced by the detectors are analysed electronically to determine those signals attributable to spontaneous fissions of the plutonium rather than background radiation and other sources. The spontaneous fissions of the plutonium produce 2, 3, 4 and higher numbers of neutrons for each event. The spontaneous fission rate is known to be proportional to the mass of certain isotopes and so to the neutron source material as a whole. Signals detected within a certain time window are taken as being indicative of a pair, rather than a single neutron, which can neither be attributed to the background or the plutonium with any certainty.

As the component of the signal relating to the pairs is indicative of the plutonium mass of certain isotopes, principally $^{240}$Pu then by making certain assumptions about the isotopic makeup of the sample the total mass can be suggested.

As well as requiring such assumptions as to the material makeup which are inappropriate given the likely variation over time of the isotopes in the waste, NCC also suffers from significant errors or inaccuracies due to the variable shielding effects of the different waste materials in which the plutonium of interest may be distributed as well as due to the different materials associated with the containers for the waste. For instance water, which will be present to varying degrees in the waste, and polyethylene or PVC, which may be associated with the container, are each strong neutron moderating materials. variation in any of these can drastically effect the detection efficiency and hence the result. Problems with the effects of changes in the detection efficiency due to the materials actual position within the sample and as a consequence within the chamber are also encountered.

As an improvement it has been proposed to undertake multiplicity counting (MC) in which the events producing single and triplet events are considered alongside the doublets. However, the count rates arising relate to four unknown parameters; the spontaneous fission rate (reflecting the isotopic make up of the material); the self-induced fission are (known as multiplication); the detection efficiency; and the $\alpha$,n reaction rate. Several other nuclear constants are also involved. The presence of three experimentally determinable factors, the single, double and triple count rates, still leaves the system unsolvable as there are four unknowns. Detection of the quadruplet counting rate is impracticable due to the very limited number of detectable occurrences for such events. In even the best prior art systems, therefore, it is necessary to set one of the unknowns at a predetermined value in reaching a solution.

Attempts to set any one of the self-induced fission rate; detection efficiency; or $\alpha$,n reaction rate are not accurate in waste samples.

The self-induced fission rate varies due to variations in materials and locations with the result that even a small error has a substantial effect on the end result due to the factors role in the equations. The detection efficiency differs from that obtained in calibration due to variations in the location of the plutonium in the waste sample and due to variations within the accompanying materials. The $\alpha$,n rate changes with the isotopic, chemical and materials in the waste matrix which will vary between samples. In each case errors in the end result arise resulting in inefficient and costly waste disposal schemes or an inaccurate inventory.

According to a first aspect of the invention we provide a method of monitoring a sample containing a neutron source in which:-

i) signals from a plurality of neutron detectors are analysed and the count rates for single, double and triple incidence of neutrons on the detectors are determined;

ii) the single, double and triple count rates are equated to a mathematical function related to the spontaneous fission rate, self-induced fission rate, detection efficiency and $\alpha$,n rate;

iii) a probability distribution is assigned to each of the self-induced fission rate, detection efficiency and $\alpha$,n reaction rate and each of the counting rates to provide a probability distribution factor for any given value;

iv) and the value of the product of all the probability distribution factors is processed to determine the maximised solution and so provide a value for the spontaneous fission rate which is linked to the mass of the neutron source.

In this way an accurate value for the mass of a neutron source within a sample of material is provided without having to make hard assumptions about any of the variables within the system.

Quadruplet or higher counts could be substituted for one of the single, pair of triple counts, but the number of events /unit time would be reduced accordingly.

The sample may be in the form of a piece of equipment, such as a glove box, ventilation unit or the like; a component of a piece of equipment, such as a filter; or a container, such as a drum, box or other package. The container may be sealed. The sample may be of waste material, such as material destined for disposal, or it may be material with a future active life for which an inventory is required.

The sample may include other materials besides the neutron source. For instance other materials such as non-neutron source elements, metals or compounds, water, plastics, glass and other sealing materials may be present.

The neutron source may comprise one or more elements or compounds, one or more isotopes of an element or mixtures of both. The neutron source may be naturally occurring and/or arise from fission reaction products. Plutonium and $^{240}$Pu in particular are neutron sources which may require such monitoring.

The neutron detectors may be of the $^3$He type. The detectors maybe provided in polyethylene or other hydrogen providing material. In this way the neutron source to be monitored can be controlled and the neutrons moderated to detectable energy levels. Alternative or additional neutron absorbing materials, such as boron or cadmium, may be provided to shield the detectors, for instance by positioning around the detectors, against background events.

The detectors may be provided around all sides and most preferably above and/or below the sample during monitoring. Between 20 and 125 detectors may be provided. Preferably between 30 and 50 detectors are provided around the sides of the sample. Preferably between 8 and 16 detectors are provided above and below the sample.

Preferably each detector is provided with an amplifier (generally to increase the pulse to a signal level suitable for further processing) and a discriminator (generally to reject or eliminate noise events.

The detector signals are preferably summed and fed to sequence analysing means. Preferably each pulse causes a time period to be considered, with other pulses being received in that period being associated with the initial pulse. In this way sequences of single, double, triple and greater numbers of neutron detections are obtained. Neutrons detected within the time period are accepted as originating from the same spontaneous fission within the sample as the initial pulse. Preferably the detections are subjected to a correction factor. The correction factor may account for accidental coincidences, for instance detections from different source simultaneous emissions which give the impression of a pair or greater.

Preferably the time period lasts between 10 and 500 micro seconds and most preferably between 50 and 100 micro seconds.

Preferably the start of the time period occurs between 5 and 10 micro seconds after the initial pulse.

Preferably the singlet count rate is related to the spontaneous fission rate, the self-multiplication factor, where

$$m = \frac{1 - p}{1 - p v_1}$$

and p = probability first neutron causes induced fission; the detection efficiency and the $\alpha$,n reaction rate by the function

$$R_1 = \varepsilon . F_s . M . v_{s1} . (1 + \alpha)$$

Preferably the doublet counting rate is related to the spontaneous fission rate, the self-multiplication factor, where

$$m = \frac{1 - p}{1 - p v_1}$$

and p = probability first neutron causes induced fission; the detection efficiency and the $\alpha$,n reaction rate by the function

$$R_2 = \varepsilon^2 . F_s . M^2 . v_{s2} \left( 1 + (M - 1)(1 + \alpha) \frac{v_{s1} v_{i2}}{v_{s2(v_i - 1)}} \right)$$

Preferably the triplet counting rate is related to the spontaneous fission rate, the self-multiplication factor, where

$$m = \frac{1 - p}{1 - p v_1}$$

and p = probability first neutron causes induced fission; the detection efficiency and the $\alpha$,n reaction rate by the function

$$R_3 = \varepsilon^3 . F_s . M^3 . v_{s3} \left( 1 + 2(M - 1) \frac{v_{s2} v_{i2}}{v_{s3(v_{s1}-1)}} + (M - 1)(1 + \alpha) \frac{v_{s1} v_{i3}}{v_{s3(v_{i2}-1)}} \left( 1 + 2(M - 1) \frac{v^2_{i2}}{v_{i3}(v_{s1-1})} \right) \right)$$

Preferably the probability distribution assigned to individual variables or counting rates is a normal distribution or a flat distribution or a triangular distribution. Normal distributions are preferably used for one or more, and most preferably all, the counting rates. Triangular distributions are preferably used for one or more, and most preferably all, the individual variables, such as detector efficiency, fission rate, multiplication distribution and alpha distribution. A flat distribution is preferably used for the fission rate.

The probability distributions may be symmetrical. The probability distributions may be skewed.

The distribution may be constrained within certain applied constraints / boundaries such that the probability distribution factor is zero beyond the constraints, particularly for triangular distributions.

The distribution may be modified such that the probability distribution factor rapidly tends to zero beyond certain values, particularly for normal distributions.

The constraints beyond which the distribution is zero or values beyond which a rapid transition to zero occurs, may be selected from one or more of the following :-

for the detection efficiency $0 \leq E \leq 1$;
for the self-induced fission rate $M \geq 1$;
for the $\alpha$,n reaction $\alpha \geq 0$.

The ranges of the distributions of one or more of the single count rate; the double count rate; and the triple count rate are preferably based on the measured count rates and their standard deviation.

The lower and / or upper values of the distributions, may be provided according to one or more or all of the following ranges :-

a) for the self-induced fission rate: according to the anticipated plutonium content; between 1.0 and 1.3, preferably 1.0 and 1.2; particularly for a high plutonium content (ie, >100g Pu) between 1.0 and 1.2; particularly for a low plutonium content (ie. <10g Pu) between 1.00 and 1.01; and for intermediate plutonium contents, intermediate ranges;
b) for the detection efficiency: according to the anticipated moderator content; between 0 and 0.3; between 0 and 0.15 for anticipated maximum efficiency levels; between 0.05 and 0.15 for moderator containing materials;
c) for the alpha,n reaction rate: according to the form or forms of plutonium anticipated; between 0 to 10, where plutonium fluorides are anticipated as present; between 0 to 2, or 0 to 1 where plutonium metal is anticipated; ; greater than 0.0 where no plutonium metal is anticipated, for instance between 0.4 and 1.0 or 0.5 and 1.0.

One or more of the constraints may be set according to information gathered from a preceding isotopic consideration or analysis of the sample. Gamma spectrometry may be employed. Information about the presence of plutonium metal and / or plutonium oxides and / or plutonium fluorides and /or moderators and / or other species or components may be obtained and applied.

The permissible values for the spontaneous fission rate may be constrained. Preferably the spontaneous fission rate is constrained to F $\geq$ 0.

The distributions may be provided according to the general form :

$$pdf(\varepsilon) = \frac{1}{\sqrt{2\pi}} \exp\left[(-1/2.\left(\frac{\varepsilon - \mu}{\sigma_\varepsilon}\right)^2\right]$$

The initial set of values assigned to the variables may be selected by the operator, predetermined or a function of prior samples which have been analysed.

The increasing, and preferably maximisation, of the product of the probability distribution factors (pdf's) is preferably performed as an iterative process. The values of one, two, three and most preferably all four of the variables are varied in each iteration. The variation or correction applied may be of a fixed value between iterations but a variable correction is preferred.

One or more of the probability distribution factors and /or the corresponding level of the variable from an optimised or maximised solution may be used to redefine the range of the applicable distribution used. One or more redefined distributions may be used in a subsequent optimisation or maximisation according to the method. Tighter errors apply as a result as tighter constraints would be applied. The redefining of the distribution(s) and their use in optimisation may be performed repeatedly.

The correction may be a correction vector. Most preferably the correction vector is derived from d(pfd)/d(x) where x is the variable, solved for zero.

In one method , because there are four variables, the part function may be partially differentiated to yield a set of four equations:-

eg. $\mu_\varepsilon = 0.12$     $\sigma_E = 0.03$
$\mu_m = 1.02$     $\sigma_m = 0.02$
$\mu_\alpha = 0.4$     $\sigma_\alpha = 0.1$

The product pdf may be partially differentiated to provide four simultaneous equations. The equations may be

$$\frac{\partial\left(\frac{\partial pdf}{\partial\varepsilon}\right)}{\partial\varepsilon}\Delta\varepsilon + \frac{\partial\left(\frac{\partial pdf}{\partial\varepsilon}\right)}{\partial F_s}\Delta F_s + \frac{\partial\left(\frac{\partial pdf}{\partial\varepsilon}\right)}{\partial M}\Delta M + \frac{\partial\left(\frac{\partial pdf}{\partial\varepsilon}\right)}{\partial\alpha}\Delta\alpha = -\frac{\partial pdf}{\partial\varepsilon}$$

$$\frac{\partial\left(\frac{\partial pdf}{\partial F_s}\right)}{\partial\varepsilon}\Delta\varepsilon + \frac{\partial\left(\frac{\partial pdf}{\partial F_s}\right)}{\partial F_s}\Delta F_s + \frac{\partial\left(\frac{\partial pdf}{\partial F_s}\right)}{\partial M}\Delta M + \frac{\partial\left(\frac{\partial pdf}{\partial F_s}\right)}{\partial\alpha}\Delta\alpha = -\frac{\partial pdf}{\partial F_s}$$

$$\frac{\partial\left(\frac{\partial pdf}{\partial M}\right)}{\partial\varepsilon}\Delta\varepsilon + \frac{\partial\left(\frac{\partial pdf}{\partial M}\right)}{\partial F_s}\Delta F_s + \frac{\partial\left(\frac{\partial pdf}{\partial M}\right)}{\partial M}\Delta M + \frac{\partial\left(\frac{\partial pdf}{\partial M}\right)}{\partial\alpha}\Delta\alpha = -\frac{\partial pdf}{\partial M}$$

$$\frac{\partial\left(\frac{\partial pdf}{\partial\alpha}\right)}{\partial\varepsilon}\Delta\varepsilon + \frac{\partial\left(\frac{\partial pdf}{\partial\alpha}\right)}{\partial F_s}\Delta F_s + \frac{\partial\left(\frac{\partial pdf}{\partial\alpha}\right)}{\partial M}\Delta M + \frac{\partial\left(\frac{\partial pdf}{\partial\alpha}\right)}{\partial\alpha}\Delta\alpha = -\frac{\partial pdf}{\partial\alpha}$$

Alternatively or additionally the effects of small variations can be determined based on linearised equations in four dimensions. The use of equations

$$\frac{\delta\left(\frac{\delta pdf}{\delta\varepsilon}\right)}{\delta\varepsilon}\Delta\varepsilon + \frac{\delta\left(\frac{\delta pdf}{\delta\varepsilon}\right)}{\delta F_s}\Delta F_s + \frac{\delta\left(\frac{\delta pdf}{\delta\varepsilon}\right)}{\delta M}\Delta M + \frac{\delta\left(\frac{\delta pdf}{\delta\varepsilon}\right)}{\delta\alpha}\Delta\alpha = -\frac{\delta pdf}{\delta\varepsilon}$$

$$\frac{\delta\left(\frac{\delta pdf}{\delta F_s}\right)}{\delta\varepsilon}\Delta\varepsilon + \frac{\delta\left(\frac{\delta pdf}{\delta F_s}\right)}{\delta F_s}\Delta F_s + \frac{\delta\left(\frac{\delta pdf}{\delta F_s}\right)}{\delta M}\Delta M + \frac{\delta\left(\frac{\delta pdf}{\delta F_s}\right)}{\delta\alpha}\Delta\alpha = -\frac{\delta pdf}{\delta F_s}$$

$$\frac{\delta\left(\frac{\delta pdf}{\delta M}\right)}{\delta\varepsilon}\Delta\varepsilon + \frac{\delta\left(\frac{\delta pdf}{\delta M}\right)}{\delta F_s}\Delta F_s + \frac{\delta\left(\frac{\delta pdf}{\delta M}\right)}{\delta M}\Delta M + \frac{\delta\left(\frac{\delta pdf}{\delta M}\right)}{\delta\alpha}\Delta\alpha = -\frac{\delta pdf}{\delta M}$$

$$\frac{\delta\left(\frac{\delta pdf}{\delta\alpha}\right)}{\delta\varepsilon}\Delta\varepsilon + \frac{\delta\left(\frac{\delta pdf}{\delta\alpha}\right)}{\delta F_s}\Delta F_s + \frac{\delta\left(\frac{\delta pdf}{\delta\alpha}\right)}{\delta M}\Delta M + \frac{\delta\left(\frac{\delta pdf}{\delta\alpha}\right)}{\delta\alpha}\Delta\alpha = -\frac{\delta pdf}{\delta\alpha}$$

where

$$\frac{\delta\left(\frac{\delta pdf}{\delta\varepsilon}\right)}{\delta F_s} \approx \frac{\delta\left(\frac{\delta pdf}{\delta\varepsilon}\right)}{\delta F_s} = \frac{\left(\frac{\delta pdf(\varepsilon, F_s, M, \alpha)}{\delta\varepsilon} - \frac{\delta pdf(\varepsilon, F_s + \Delta F_s, M, \alpha)}{\delta\varepsilon}\right)}{\delta F_s}$$

is the 2nd order derivative of

$$\left(\frac{\delta pdf}{\delta\varepsilon}\right) \approx \left(\frac{\delta pdf}{\delta\varepsilon}\right) = \frac{pdf\left(\varepsilon + \delta\varepsilon, F_s, M, \alpha, \mu_{R_1}, \mu_{R_1}, \mu_{R_1}\right) - pdf\left(\varepsilon, F_s, M, \alpha, \mu_{R_1}, \mu_{R_1}, \mu_{R_1}\right)}{\delta\varepsilon}$$

etc.

may be employed. These functions may be solved to give a correction vector, for instance

$$\begin{bmatrix} \Delta_e \\ \Delta_F \\ \Delta_m \\ \Delta_\alpha \end{bmatrix}$$

The method may handle the solution in matrix form.

Preferably the process is repeated until the correction vector is below a given threshold. The threshold may be predetermined.

The initial pdf values for the allocated initial values are preferably evaluated as positive and negative correction vectors. Preferably each subsequent iterations pdf values are similarly evaluated. In this way the effects of poor starting criteria are alleviated.

For a pdf the correction vector may be multiplied by a constant factor and divided by a constant factor and the corresponding new pdf compared with the preceding pdf, if the pdf value is greater than the preceding pdf the new correction vector is applied, if the pdf value is less than the preceding value the new correction factor is divided by the constant once more and the new pdf for this further correction factor compared with the new preceding pdf, with the stages further being repeated if necessary. Preferably the multiplication factor is 32 and/or the divisive factor is 0.5. Most preferably these steps are performed for both positive and negative correction vectors.

If one or more of the initially allocated values corresponds to a pdf of zero a new value may be allocated. Alternatively the count rate standard deviations maybe multiplied by a constant factor, greater than 1. In this way a pdf value can be provided for which derivatives can be calculated.

Preferably once the correction vector is below a certain threshold the standard deviation can be divided by the initial constant or a lower figure and the solution maximised once more. This process is preferably repeated until the inflationary factor is 1.

Preferably the method includes the provision of associated error estimates. Total uncertainty within the system may be determined.

The associated error estimates may be determined by equations

$$\left(\sigma_{\hat{\varepsilon}}\right)^2 = \left(\left(\frac{\partial\hat{\varepsilon}}{\partial R_1}\right)\sigma_{R_1}\right)^2 + \left(\left(\frac{\partial\hat{\varepsilon}}{\partial R_2}\right)\sigma_{R_2}\right)^2 + \left(\left(\frac{\partial\hat{\varepsilon}}{\partial R_3}\right)\sigma_{R_3}\right)^2$$

$$\left(\sigma_{\hat{F}_s}\right)^2 = \left(\left(\frac{\partial\hat{F}_s}{\partial R_1}\right)\sigma_{R_1}\right)^2 + \left(\left(\frac{\partial\hat{F}_s}{\partial R_2}\right)\sigma_{R_2}\right)^2 + \left(\left(\frac{\partial\hat{F}_s}{\partial R_3}\right)\sigma_{R_3}\right)^2$$

$$\left(\sigma_{\hat{M}}\right)^2 = \left(\left(\frac{\partial\hat{M}}{\partial R_1}\right)\sigma_{R_1}\right)^2 + \left(\left(\frac{\partial\hat{M}}{\partial R_2}\right)\sigma_{R_2}\right)^2 + \left(\left(\frac{\partial\hat{M}}{\partial R_3}\right)\sigma_{R_3}\right)^2$$

$$\left(\sigma_{\hat{\alpha}}\right)^2 = \left(\left(\frac{\partial\hat{\alpha}}{\partial R_1}\right)\sigma_{R_1}\right)^2 + \left(\left(\frac{\partial\hat{\alpha}}{\partial R_2}\right)\sigma_{R_2}\right)^2 + \left(\left(\frac{\partial\hat{\alpha}}{\partial R_3}\right)\sigma_{R_3}\right)^2$$

Alternatively the associated error estimates may be obtained from the equations

$$\left(\sigma_{\hat{\varepsilon}}\right)^2 = \left(\left(\frac{\delta\hat{\varepsilon}}{\delta R_1}\right)\sigma_{R_1}\right)^2 + \left(\left(\frac{\delta\hat{\varepsilon}}{\delta R_2}\right)\sigma_{R_2}\right)^2 + \left(\left(\frac{\delta\hat{\varepsilon}}{\delta R_3}\right)\sigma_{R_3}\right)^2$$

$$\left(\sigma_{\hat{F}_s}\right)^2 = \left(\left(\frac{\delta\hat{F}_s}{\delta R_1}\right)\sigma_{R_1}\right)^2 + \left(\left(\frac{\delta\hat{F}_s}{\delta R_2}\right)\sigma_{R_2}\right)^2 + \left(\left(\frac{\delta\hat{F}_s}{\delta R_3}\right)\sigma_{R_3}\right)^2$$

$$\left(\sigma_{\hat{M}}\right)^2 = \left(\left(\frac{\delta\hat{M}}{\delta R_1}\right)\sigma_{R_1}\right)^2 + \left(\left(\frac{\delta\hat{M}}{\delta R_2}\right)\sigma_{R_2}\right)^2 + \left(\left(\frac{\delta\hat{M}}{\delta R_3}\right)\sigma_{R_3}\right)^2$$

$$(\sigma_{\hat{a}})^2 = \left(\left(\frac{\delta\hat{\alpha}}{\delta R_1}\right)\sigma_{R_1}\right)^2 + \left(\left(\frac{\delta\hat{\alpha}}{\delta R_2}\right)\sigma_{R_2}\right)^2 + \left(\left(\frac{\delta\hat{\alpha}}{\delta R_3}\right)\sigma_{R_3}\right)^2$$

where

$$\left(\frac{\partial\hat{\varepsilon}}{\partial R_1}\right) \approx \left(\frac{\delta\hat{\varepsilon}}{\delta R_1}\right) \simeq \frac{\hat{\varepsilon}\left(\mu_{R_1} + \delta\mu_{R_1}, \mu_{R_2}, \mu_{R_3}\right) - \hat{\varepsilon}\left(\mu_{R_1}, \mu_{R_2}, \mu_{R_3}\right)}{\delta\mu_{R_1}}$$

etc.

where $\delta\mu_{R2}$ = a small change in $\mu_{R1}$ etc.

$\varepsilon(\mu_{R1}, \mu_{R2}, \mu_{R3})$ = final estimate from solution to $(\mu_{R1}, \mu_{R2}, \mu_{R3})$ count rates set.

According to a second aspect of the invention we provide an apparatus according to claim 13.

The sample may be in the form of a piece of equipment, such as a glove box, ventilation unit or the like; a component of a piece of equipment, such as a filter; or a container, such as a drum, box or other package. The container may be sealed. The sample may be of waste material, such as material destined for disposal, or it may be material with a future active life for which an inventory is required.

The sample may include other materials besides the neutron source. For instance other materials such as non-neutron source elements, metals or compounds, water, plastics, glass and other sealing materials may be present.

The neutron source may comprise one or more elements or compounds, one or more isotopes of an element or mixtures of both. The neutron source may be naturally occurring and/or arise from fission reaction products. Plutonium and $^{240}$Pu in particular are neutron sources which may require such monitoring.

The neutron detectors may be of the $^3$He type. The detectors maybe provided in polyethylene or other hydrogen providing material. In this way the neutron source to be monitored can be controlled and the neutrons moderated to detectable energy levels. Alternative or additional neutron shielding materials such as boron or cadmium may be provided to shield the detectors, for instance by positioning around the detectors.

The detectors may be provided around all sides and most preferably above and/or below the sample during monitoring. Between 20 and 125 detectors may be provided. Preferably between 30 and 50 detectors are provided around the sides of the sample. Preferably between 8 and 16 detectors are provided above and below the sample.

The detector signals are preferably summed and fed to sequence analysing means. Preferably each pulse causes a time period to be considered, with other pulses being received in that period being associated with the initial pulse. In this way sequences of single, double, triple and greater numbers of neutron detections are obtained. Neutrons detected within the time period are accepted as originating from the same spontaneous fission within the sample as the initial pulse.

Other features and options available for the apparatus and its operating procedure are provide elsewhere within the application.

According to a third aspect of the invention we provide a sample monitored using the method of the first aspect of the invention and/or using the apparatus of the second aspect of the invention.

Various embodiments of the invention will now be described by way of example only and with reference to the accompanying drawings in which :-

Figure 1 is an illustration of a detection chamber layout;

Figure 2 illustrates a distribution assigned to the detection efficiency;

Figure 3a illustrates the probability distribution for a variable under consideration;

Figure 3b shows the partial derivative function and a correction vector for the probability distribution of Figure 4a;

Figure 4a illustrates the probability distribution for an alternative determination;

Figure 4b shows the partial derivative function for the probability distribution of Figure 5a illustrating the problem with poorly selected initial values;

Figure 5 provides a comparison of NCC and multiplicity counting measurements of a $^{252}$Cf source in various matrix filled drums;

Figure 6 illustrates a comparison of NCC and multiplicity counting measurements of a Pu source in various matrix filled drums;

Figure 7 provides a comparison of NCC and multiplicity counting limits of detection for a drum containing 50kg of PVC; and

Figure 8 provides a comparison of NCC and multiplicity counting limits of detection for a drum containing 270kg of steel hulls.

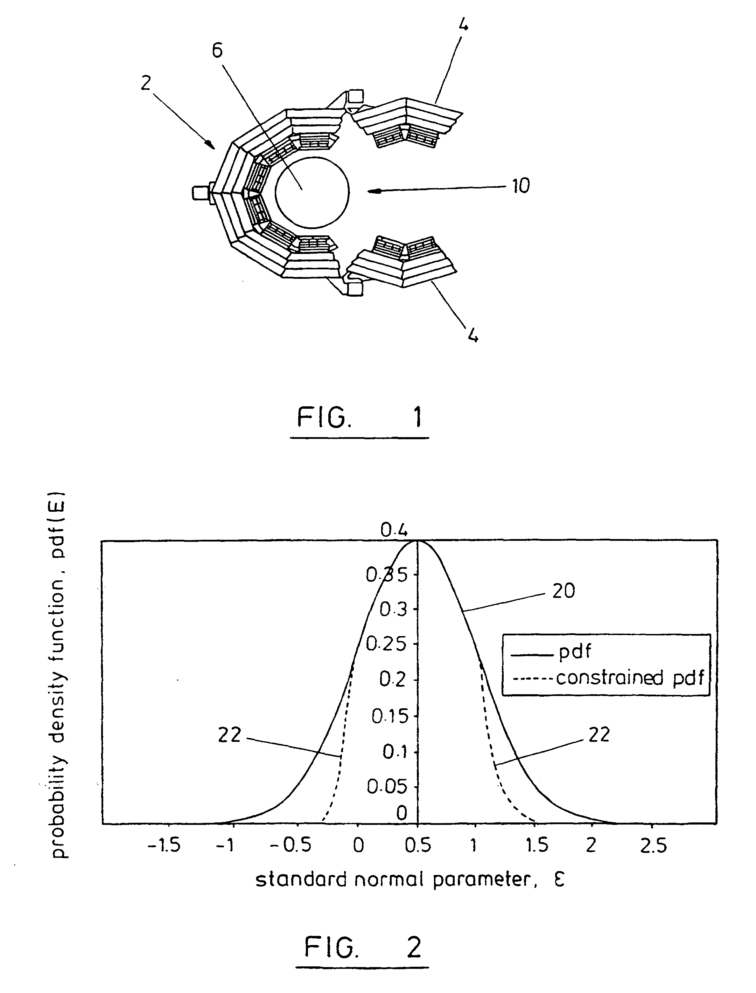

The detection chamber illustrated in Figure 1 comprises a ten sided chamber 2 with an openable wall portions 4 to provide access for a drum 6 or the like to be monitored. Four $^{3}$He detectors are provided in each side with twelve similar detectors in both the ceiling and floor 10 of the chamber.

Drums, 200 litre drums can be accommodated, may be lifted into the chamber, positioned there by forklift truck or conveyed on a bed of rollers. Suspending the drum is preferred to avoid having to strengthen the base of the chamber. Any such bearing surface could interfere with the detection efficiency of the base detectors. Once positioned the chamber is shut.

The neutron detectors are of conventional type in tube configuration 1m long, 2.5cm in diameter and operated at 4 atmosphere pressure and 960V. The outside of the chamber 2 is provided with an 24cm thick layer of polyethylene to act as a neutron shield to any background radiation. The detectors are arranged vertically in bores in an inner layer of 8 cm thick polyethylene. A 1mm layer of cadmium is provided on the inside and outside of the layer to prevent neutrons returning to the chamber and to prevent thermalise neutrons reaching the detectors.

Each detector is provided with a preamplifier, amplifier and discriminator to minimise dead time effects on the signals. The signals are all summed and then fed to a frequency analyser.

The frequency analyser works on each pulse in the following manner. A received pulse opens after a preset period an observation interval with the number of pulses falling within this period being counted. A frequency distribution for the number of pulses detected within the observation window is generated as a result. Singlets, doublets, triplets, quadruplets and higher sets can be expected with decreasing occurrences .

The singlet, doublet and triplet counting rates are determined according to the following procedure.

The total neutron count rate observed during the measurement, $N_T$, is obtained simply by counting the number of signals. The first and second factorial moments of the frequency distribution, $M_{m(1)}$ and $N_{m(2)}$, are also calculated from the frequency table, using the following equations:-

$$N_{m(1)} = \sum_{x=1}^{x=N_{max}} x \cdot N_x \qquad (1)$$

$$N_{m(2)} = \sum_{x=2}^{x=N_{max}} \binom{x}{2} \cdot N_x = \sum_{x=2}^{x=N_{max}} \frac{x(x-1)}{2} \cdot N_x \qquad (2)$$

where:

$N_x$      is the normalised frequency to have x signals in the observation interval.
$N_{max}$   is the maximum number of signals observed in any observation interval.

The total count rate and the first and second factorial moments are then background corrected and used in the following equations to calculate the singlet count rate, and the rate of correlated doublets and triplets, $R_1$, $R_2$ and $R_3$ respectively.

$$R_1 = N_T \tag{3}$$

$$R_2 = \frac{N_T \cdot N_{m(1)} - R_1^2 \cdot \tau}{f} \tag{4}$$

$$R_3 = \frac{N_T \cdot N_{m(2)} - R_2 \cdot R_1 \cdot \tau\{f + W_2\} - \frac{1}{2} \cdot R_1^3 \cdot \tau^2}{f^2} \tag{5}$$

where:

$\tau =$  length of the observation interval

$1/\lambda =$  neutron die away time

$T =$  pre-delay

$$f = e^{-\lambda T}\left(1 - e^{-\lambda \tau}\right) \tag{6}$$

$$W_2 = 1 - \frac{1}{\lambda \tau}\left(1 - e^{-\lambda \tau}\right) \tag{7}$$

The counting rates obtained can then be applied to the following equations which relate the counting rates to the spontaneous fission rate, the self-induced fission rate, the detection efficiency and the alpha, n reaction rate.

$$R_1 = \varepsilon \cdot F_s \cdot M \cdot v_{s1} \cdot (1 + \alpha)$$

$$R_2 = \varepsilon^2 \cdot F_s \cdot M^2 \cdot v_{s2} \cdot \left(1 + (M-1)(1+\alpha)\frac{v_{s1} v_{I2}}{v_{s2}(v_{I1}-1)}\right)$$

$$R_3 = \varepsilon^3 \cdot F_s \cdot M^3 \cdot v_{s3} \cdot \left(1 + 2(M-1)\frac{v_{s2} v_{I2}}{v_{s3}(v_{I1}-1)} + (M-1)(1+\alpha)\frac{v_{s1} v_{I3}}{v_{s3}(v_{I1}-1)}\left(1 + 2(M-1)\frac{v_{I2}^2}{v_{I3}(v_{s1}-1)}\right)\right)$$

where

$\varepsilon =$  detector efficiency $F_s =$ the spontaneous fission rate of the sample

$M =$  the leakage multiplication

$\alpha =$  $(\alpha,n)$ to spontaneous fission ratio

$n_{Sn} =$  the nth spontaneous fission factorial moment

$n_{In} =$  the nth induced fission factorial moment

$v_{Sn} =$  the nth spontaneous fission factorial moment (for plutonium)

$v_{In} =$  the nth induced fission factorial moment (for plutonium)

Rather than fixing one of the unknown values to obtain a solution to the equations the present invention seeks a best fit solution to the information obtained based on certain known absolute constraints and certain probability distributions assigned to each of the unknowns. Information about the mean values and standard deviations for the counting rate are determined experimentally. Information on the distributions for the other parameters can be obtained by calibration experiments aswell as being based on experience and past tests.

The distributions are provided in the following manner :-

Detection Efficiency Distribution

$$\varepsilon \sim N(\mu\varepsilon, \sigma\varepsilon)$$

$$0 \leq \varepsilon \leq 1$$

where

$\mu_\varepsilon =$   mean value of the efficiency distribution
$\sigma_\varepsilon =$   standard deviation of the efficiency distribution

Fission Rate Distribution

Is constrained to be $F_s \geq 0$ but is otherwise left free floating as the variable to be obtained.

Multiplication Distribution

$$M \sim N(\mu_M, \sigma_M)$$

$$M \geq 1$$

where

$\mu_M =$   mean value of the multiplication distribution
$\sigma_M =$   standard deviation of the multiplication distribution

Alpha Distribution

$$\alpha \sim N(\mu_\alpha, \sigma_\alpha)$$

$$\alpha \geq 0$$

where

$\mu_\alpha =$   mean value of the alpha distribution
$\sigma_\alpha =$   standard deviation of the alpha distribution

Singles Count Rate Distribution

$$R_1 \sim N(\mu_{R1}, \sigma_{R1})$$

where $\mu_{R1}$ = mean value of the singles distribution obtained by measurement
$\sigma_{R1}$ = standard deviation of the singles distribution

Doubles Count Rate Distribution

$$R_2 \sim N(\mu_{R2}, \sigma_{R2})$$

where $\mu_{R2}$ = mean value of the doubles distribution obtained by measurement
$\sigma_{R2}$ = standard deviation of the doubles distribution

Triples Count Rate Distribution

$$R_3 \sim N(\mu_{R3}, \sigma_{R3})$$

where $\mu_{R3}$ = mean value of the triples distribution obtained by measurement
$\sigma_{R3}$ = standard deviation of the triples distribution

The probability distribution function (pdf) is assigned a normal distribution with the pdf of any trial value being calculated by

$$z = \left( \frac{y_i - \mu_y}{\sigma_y} \right)$$

$$pdf(y_i) = \frac{1}{\sqrt{2\pi}} \cdot \exp\left(-0.5 z^2\right)$$

Figure 2 illustrates such a normal distribution for the detection efficiency. Strictly speaking the pdf 20 should change abruptly to zero when either of the constraints for the efficiency is reached, i.e. greater than or equal to zero and less than or equal to one, however, if such strict limits are applied an adverse effect on the solution process results. As a consequence a constrained pdf 22 is provided but in a form which crosses the constraints to an extent.

The overall pdf for the variables can be determined by first calculating the count rates and then determining the product of all the individual pdf's. The solution is the set of values for the unknown parameters which give the maximum pdf product value, calculated according to

$$pdf\ (\varepsilon, F_s, M, \alpha, \mu_{R1}, \mu_{R2}, \mu_{R3}) = pdf(\varepsilon) \times pdf\ (F) \times pdf\ (M) \times pdf(\alpha)$$

$$\times pdf(\mu_{R1}) \times pdf(\mu_{R2}) \times pdf(\mu_{R3})$$

The method for determining the maximum solution to such a function is to differentiate the function and solve for d(function)/d(parameter)=zero. As the pdf product has four input parameters it needs to be partially differentiated to yield four simultaneous equations which can then be solved. Linearisation method or Taylor series method is used to determine corrections ($\Delta\varepsilon$; $\Delta F_{S1}$; $\Delta M$; $\Delta\alpha$) to be made to the trial value set selected in order to reduce the observed partial derivatives to zero.

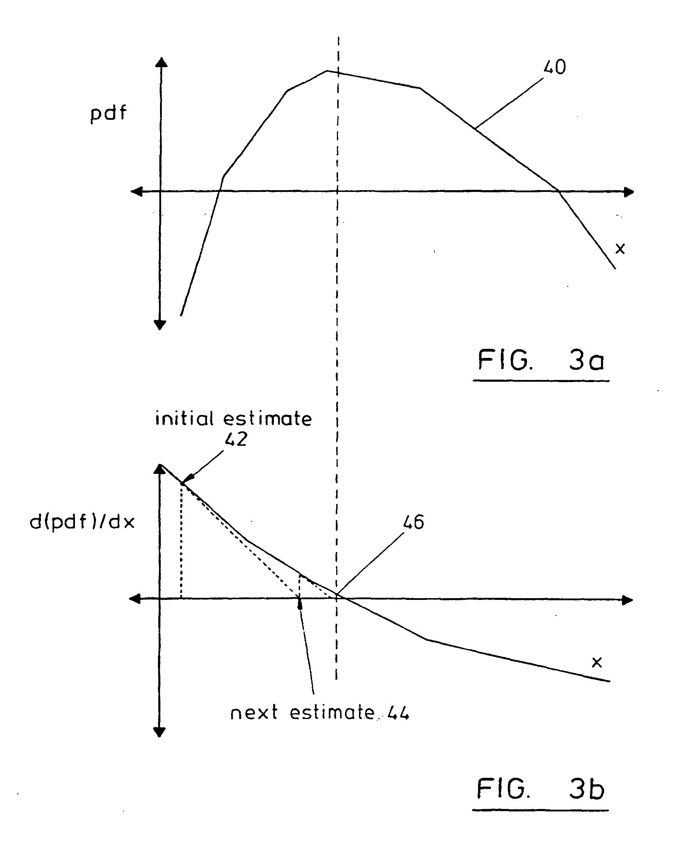

Figure 3a shows a probability distribution 40 for a variable with the partial derivative of this distribution being provided in Figure 3b. This illustrates in a single dimension the correction applied to an initial estimate 42 to give the next estimate 44. This in turn produces a further correction factor and a subsequent further estimate 46 and so on.

In four dimensions the linearised equations are

$$\frac{\partial\left(\frac{\partial pdf}{\partial\varepsilon}\right)}{\partial\varepsilon}\Delta\varepsilon + \frac{\partial\left(\frac{\partial pdf}{\partial\varepsilon}\right)}{\partial F_s}\Delta F_s + \frac{\partial\left(\frac{\partial pdf}{\partial\varepsilon}\right)}{\partial M}\Delta M + \frac{\partial\left(\frac{\partial pdf}{\partial\varepsilon}\right)}{\partial\alpha}\Delta\alpha = -\frac{\partial pdf}{\partial\varepsilon}$$

$$\frac{\partial\left(\frac{\partial pdf}{\partial F_s}\right)}{\partial\varepsilon}\Delta\varepsilon + \frac{\partial\left(\frac{\partial pdf}{\partial F_s}\right)}{\partial F_s}\Delta F_s + \frac{\partial\left(\frac{\partial pdf}{\partial F_s}\right)}{\partial M}\Delta M + \frac{\partial\left(\frac{\partial pdf}{\partial F_s}\right)}{\partial\alpha}\Delta\alpha = -\frac{\partial pdf}{\partial F_s}$$

$$\frac{\partial\left(\frac{\partial pdf}{\partial M}\right)}{\partial\varepsilon}\Delta\varepsilon + \frac{\partial\left(\frac{\partial pdf}{\partial M}\right)}{\partial F_s}\Delta F_s + \frac{\partial\left(\frac{\partial pdf}{\partial M}\right)}{\partial M}\Delta M + \frac{\partial\left(\frac{\partial pdf}{\partial M}\right)}{\partial\alpha}\Delta\alpha = -\frac{\partial pdf}{\partial M}$$

$$\frac{\partial\left(\frac{\partial pdf}{\partial\alpha}\right)}{\partial\varepsilon}\Delta\varepsilon + \frac{\partial\left(\frac{\partial pdf}{\partial\alpha}\right)}{\partial F_s}\Delta F_s + \frac{\partial\left(\frac{\partial pdf}{\partial\alpha}\right)}{\partial M}\Delta M + \frac{\partial\left(\frac{\partial pdf}{\partial\alpha}\right)}{\partial\alpha}\Delta\alpha = -\frac{\partial pdf}{\partial\alpha}$$

In order to simplify the analytical evaluation of these equations good approximations can be determined from the pdf product equation by observing the effects of small changes in the individual parameters. As an example involving a small change in the detection efficiency, $\varepsilon$, the 1st order derivative

$$\left(\frac{\partial pdf}{\partial\varepsilon}\right) \approx \left(\frac{\delta pdf}{\delta\varepsilon}\right) = \frac{pdf\left(\varepsilon + \delta\varepsilon, F_s, M, \alpha, \mu_{R_1}, \mu_{R_1}, \mu_{R_1}\right) - pdf\left(\varepsilon, F_s, M, \alpha, \mu_{R_1}, \mu_{R_1}, \mu_{R_1}\right)}{\delta\varepsilon}$$

is arrived at. This expands to give the second order derivative approximation

$$\frac{\partial\left(\frac{\partial pdf}{\partial\varepsilon}\right)}{\partial F_s} \approx \frac{\delta\left(\frac{\delta pdf}{\delta\varepsilon}\right)}{\delta F_s} = \frac{\left(\frac{\delta pdf(\varepsilon, F_s, M, \alpha)}{\delta\varepsilon} - \frac{\delta pdf(\varepsilon, F_s + \Delta F_s, M, \alpha)}{\delta\varepsilon}\right)}{\delta F_s}$$

with the result that the linearisation equations are approximated by

$$\frac{\delta\left(\frac{\delta pdf}{\delta\varepsilon}\right)}{\delta\varepsilon}\Delta\varepsilon + \frac{\delta\left(\frac{\delta pdf}{\delta\varepsilon}\right)}{\delta F_s}\Delta F_s + \frac{\delta\left(\frac{\delta pdf}{\delta\varepsilon}\right)}{\delta M}\Delta M + \frac{\delta\left(\frac{\delta pdf}{\delta\varepsilon}\right)}{\delta\alpha}\Delta\alpha = -\frac{\delta pdf}{\delta\varepsilon}$$

$$\frac{\delta\left(\frac{\delta pdf}{\delta F_s}\right)}{\delta\varepsilon}\Delta\varepsilon + \frac{\delta\left(\frac{\delta pdf}{\delta F_s}\right)}{\delta F_s}\Delta F_s + \frac{\delta\left(\frac{\delta pdf}{\delta F_s}\right)}{\delta M}\Delta M + \frac{\delta\left(\frac{\delta pdf}{\delta F_s}\right)}{\delta\alpha}\Delta\alpha = -\frac{\delta pdf}{\delta F_s}$$

$$\frac{\delta\left(\frac{\delta pdf}{\delta M}\right)}{\delta\varepsilon}\Delta\varepsilon + \frac{\delta\left(\frac{\delta pdf}{\delta M}\right)}{\delta F_s}\Delta F_s + \frac{\delta\left(\frac{\delta pdf}{\delta M}\right)}{\delta M}\Delta M + \frac{\delta\left(\frac{\delta pdf}{\delta M}\right)}{\delta\alpha}\Delta\alpha = -\frac{\delta pdf}{\delta M}$$

$$\frac{\delta\left(\frac{\delta pdf}{\delta\alpha}\right)}{\delta\varepsilon}\Delta\varepsilon + \frac{\delta\left(\frac{\delta pdf}{\delta\alpha}\right)}{\delta F_s}\Delta F_s + \frac{\delta\left(\frac{\delta pdf}{\delta\alpha}\right)}{\delta M}\Delta M + \frac{\delta\left(\frac{\delta pdf}{\delta\alpha}\right)}{\delta\alpha}\Delta\alpha = -\frac{\delta pdf}{\delta\alpha}$$

These equations are most readily handled in matrix notation; D2 x $\Delta$ X = D1
where

$$: D1 = \begin{pmatrix} -\dfrac{\delta pdf}{\delta\varepsilon} \\ -\dfrac{\delta pdf}{\delta F_s} \\ -\dfrac{\delta pdf}{\delta M} \\ -\dfrac{\delta pdf}{\delta\alpha} \end{pmatrix}$$

$$D2 = \begin{pmatrix} \dfrac{\delta\left(\frac{\delta pdf}{\delta\varepsilon}\right)}{\delta\varepsilon} & \dfrac{\delta\left(\frac{\delta pdf}{\delta\varepsilon}\right)}{\delta F_s} & \dfrac{\delta\left(\frac{\delta pdf}{\delta\varepsilon}\right)}{\delta M} & \dfrac{\delta\left(\frac{\delta pdf}{\delta\varepsilon}\right)}{\delta\alpha} \\ \dfrac{\delta\left(\frac{\delta pdf}{\delta F_s}\right)}{\delta\varepsilon} & \dfrac{\delta\left(\frac{\delta pdf}{\delta F_s}\right)}{\delta F_s} & \dfrac{\delta\left(\frac{\delta pdf}{\delta F_s}\right)}{\delta M} & \dfrac{\delta\left(\frac{\delta pdf}{\delta F_s}\right)}{\delta\alpha} \\ \dfrac{\delta\left(\frac{\delta pdf}{\delta M}\right)}{\delta\varepsilon} & \dfrac{\delta\left(\frac{\delta pdf}{\delta M}\right)}{\delta F_s} & \dfrac{\delta\left(\frac{\delta pdf}{\delta M}\right)}{\delta M} & \dfrac{\delta\left(\frac{\delta pdf}{\delta M}\right)}{\delta\alpha} \\ \dfrac{\delta\left(\frac{\delta pdf}{\delta\alpha}\right)}{\delta\varepsilon} & \dfrac{\delta\left(\frac{\delta pdf}{\delta\alpha}\right)}{\delta F_s} & \dfrac{\delta\left(\frac{\delta pdf}{\delta\alpha}\right)}{\delta M} & \dfrac{\delta\left(\frac{\delta pdf}{\delta\alpha}\right)}{\delta\alpha} \end{pmatrix}$$

$$\Delta X = \begin{pmatrix} \Delta \varepsilon \\ \Delta F_s \\ \Delta M \\ \Delta \alpha \end{pmatrix}$$

Successive estimates are given by $X_{n+i} = X_n + \Delta X_n$ which process is repeated until the correction vector is below a certain predetermined threshold which is accepted as negligible. A final solution

$$\begin{pmatrix} \hat{\varepsilon} \\ \hat{F}_s \\ \hat{M} \\ \hat{\alpha} \end{pmatrix} = X_{final}$$

results. This solution provides a very good fit to the experimental results obtained. From the spontaneous fission rate value so obtained the mass of the neutron emitting isotopes in the sample can be obtained. This in turn can be linked to the overall neutron source mass.

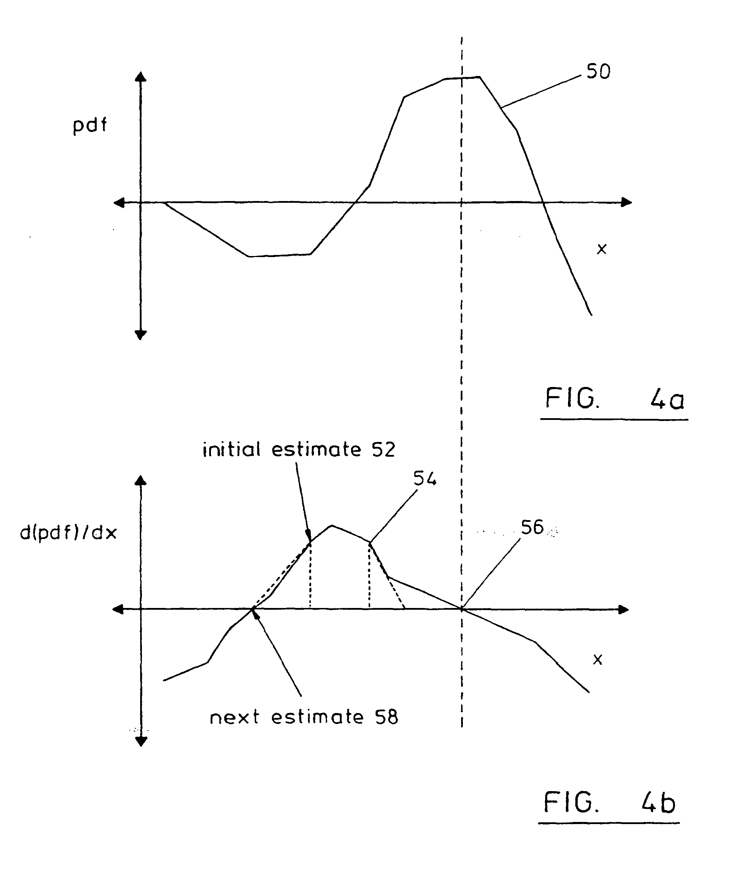

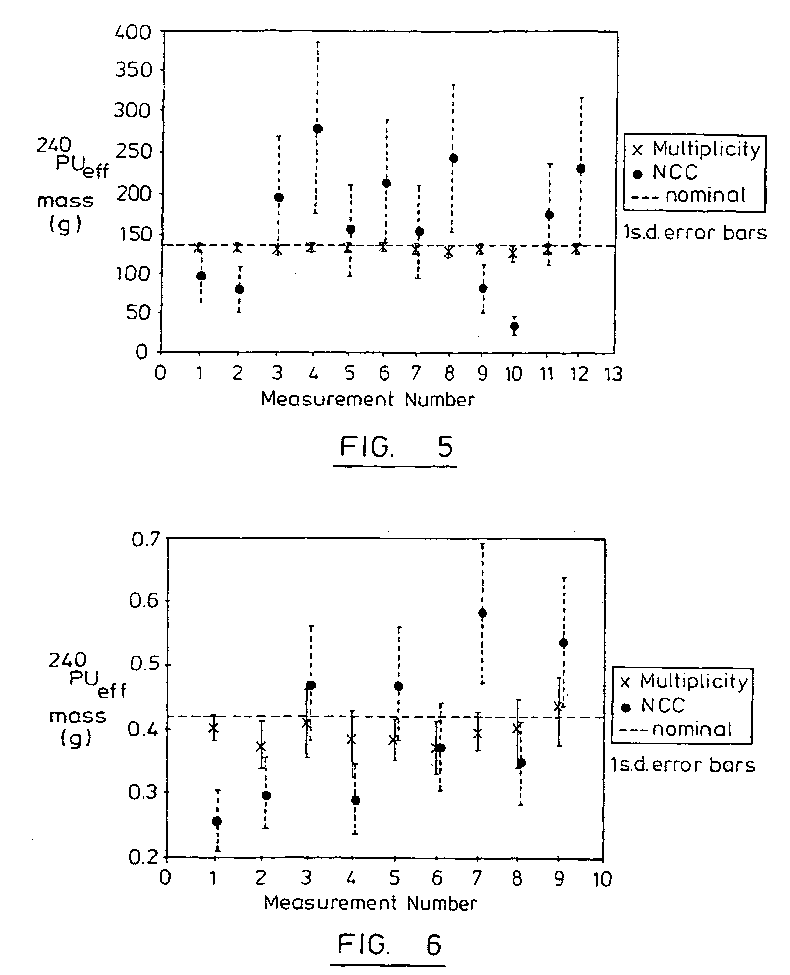

In certain cases due to unusual sample conditions or due to poor selection of the starting criteria the correction vector provided may be such that a true solution cannot be obtained. As illustrated in Figure 4a with the pdf 50 shown, the differentiated pdf, Figure 5b, may not change sign between the initial estimate 52 and the solution. If the initial estimate 54 is fortunately located then a true solution 56 will be tended towards, but if the initial estimate 52 is not so fortunate a false solution 58 will be tended towards.

To counter this a trial pdf is evaluated for both positive and negative correction factors.

The correction vector may substantially overestimate or underestimate the distance to a solution, because the function is non-linear. To counter this the correction vector for a pdf value is multiplied by 32 and then halved and the pdf value recalculated. This pdf value is compared against the original. If the new pdf value is less than the previous the process is repeated and the new value compared with the new previous value. If the new value is greater than the previous then the correction vector is applied at that value. Otherwise the process is repeated until such a situation is reached.

To avoid the situation where the initial pdf is zero and as a consequence derivatives cannot be calculated, due to poorly selected starting conditions for instance, the count rate standard deviation is inflated in such a case. Multiplication by a large constant is employed to this end. After the process has converged towards a solution the value of this factor is reduced in stages and the process repeated until a solution is obtained with the inflationary factor set at zero.

In any experimentally derived result it is important to know the error possible in the result. This is particularly so for the monitoring situations with which this method is principally concerned as the implementation of the waste disposal based upon it must always act on the worst possible case in meeting the critical safety factors.

The associated error estimates are determined as follows. In each case the precision of the final solution is dependant on the precision of the count rates for the singlets, doublets and triplets. Assuming these count rates are independent the variance is given by

$$\left(\sigma_{\hat{\varepsilon}}\right)^2 = \left(\left(\frac{\partial \hat{\varepsilon}}{\partial R_1}\right)\sigma_{R_1}\right)^2 + \left(\left(\frac{\partial \hat{\varepsilon}}{\partial R_2}\right)\sigma_{R_2}\right)^2 + \left(\left(\frac{\partial \hat{\varepsilon}}{\partial R_3}\right)\sigma_{R_3}\right)^2$$

$$\left(\sigma_{\hat{F}_s}\right)^2 = \left(\left(\frac{\partial \hat{F}_s}{\partial R_1}\right)\sigma_{R_1}\right)^2 + \left(\left(\frac{\partial \hat{F}_s}{\partial R_2}\right)\sigma_{R_2}\right)^2 + \left(\left(\frac{\partial \hat{F}_s}{\partial R_3}\right)\sigma_{R_3}\right)^2$$

$$\left(\sigma_{\hat{M}}\right)^2 = \left(\left(\frac{\partial \hat{M}}{\partial R_1}\right)\sigma_{R_1}\right)^2 + \left(\left(\frac{\partial \hat{M}}{\partial R_2}\right)\sigma_{R_1}\right)^2 + \left(\left(\frac{\partial \hat{M}}{\partial R_3}\right)\sigma_{R_1}\right)^2$$

$$\left(\sigma_{\hat{\alpha}}\right)^2 = \left(\left(\frac{\partial \hat{\alpha}}{\partial R_1}\right)\sigma_{R_1}\right)^2 + \left(\left(\frac{\partial \hat{\alpha}}{\partial R_2}\right)\sigma_{R_1}\right)^2 + \left(\left(\frac{\partial \hat{\alpha}}{\partial R_3}\right)\sigma_{R_1}\right)^2$$

The partial derivatives again need not be determined but can be approximated by

$$\left(\frac{\partial \hat{\varepsilon}}{\partial R_1}\right) \approx \left(\frac{\delta \hat{\varepsilon}}{\delta R_1}\right) = \frac{\hat{\varepsilon}\left(\mu_{R_1} + \delta\mu_{R_1}, \mu_{R_1}, \mu_{R_1}\right) - \hat{\varepsilon}\left(\mu_{R_1}, \mu_{R_1}, \mu_{R_1}\right)}{\delta\mu_{R_1}}$$

where $\delta\mu_{R1}$ = a small change in $\mu_{R1}$ etc.
$\varepsilon(\mu_{R1},\mu_{R2},\mu_{R3})$ = final estimate from solution to $(\mu_{R1},\mu_{R2},\mu_{R3})$ count rates set with the partial derivatives being determined for each of the count rates based on the observed rates and small deviations in each.
The approximate error estimates are thus given by

$$\left(\sigma_{\hat{\varepsilon}}\right)^2 = \left(\left(\frac{\delta \hat{\varepsilon}}{\delta R_1}\right)\sigma_{R_1}\right)^2 + \left(\left(\frac{\delta \hat{\varepsilon}}{\delta R_2}\right)\sigma_{R_1}\right)^2 + \left(\left(\frac{\delta \hat{\varepsilon}}{\delta R_3}\right)\sigma_{R_1}\right)^2$$

$$\left(\sigma_{\hat{F}_s}\right)^2 = \left(\left(\frac{\delta \hat{F}_s}{\delta R_1}\right)\sigma_{R_1}\right)^2 + \left(\left(\frac{\delta \hat{F}_s}{\delta R_2}\right)\sigma_{R_1}\right)^2 + \left(\left(\frac{\delta \hat{F}_s}{\delta R_3}\right)\sigma_{R_1}\right)^2$$

$$\left(\sigma_{\hat{M}}\right)^2 = \left(\left(\frac{\delta \hat{M}}{\delta R_1}\right)\sigma_{R_1}\right)^2 + \left(\left(\frac{\delta \hat{M}}{\delta R_2}\right)\sigma_{R_1}\right)^2 + \left(\left(\frac{\delta \hat{M}}{\delta R_3}\right)\sigma_{R_1}\right)^2$$

$$\left(\sigma_{\hat{\alpha}}\right)^2 = \left(\left(\frac{\delta \hat{\alpha}}{\delta R_1}\right)\sigma_{R_1}\right)^2 + \left(\left(\frac{\delta \hat{\alpha}}{\delta R_2}\right)\sigma_{R_1}\right)^2 + \left(\left(\frac{\delta \hat{\alpha}}{\delta R_3}\right)\sigma_{R_1}\right)^2$$

which in matrix notation becomes

$$VX = DR \times VR$$

where

$$VX = \begin{pmatrix} \left(\sigma_{\hat{\varepsilon}}\right)^2 \\ \left(\sigma_{\hat{F}_s}\right)^2 \\ \left(\sigma_{\hat{M}}\right)^2 \\ \left(\sigma_{\hat{\alpha}}\right)^2 \end{pmatrix}$$

$$VR = \begin{pmatrix} \left(\sigma_{R_1}\right)^2 \\ \left(\sigma_{R_2}\right)^2 \\ \left(\sigma_{R_3}\right)^2 \end{pmatrix}$$

$$DR = \begin{pmatrix} \left(\dfrac{\delta\hat{\varepsilon}}{\delta R_1}\right)^2 & \left(\dfrac{\delta\hat{\varepsilon}}{\delta R_2}\right)^2 & \left(\dfrac{\delta\hat{\varepsilon}}{\delta R_3}\right)^2 \\ \left(\dfrac{\delta\hat{F}_s}{\delta R_1}\right)^2 & \left(\dfrac{\delta\hat{F}_s}{\delta R_2}\right)^2 & \left(\dfrac{\delta\hat{F}_s}{\delta R_3}\right)^2 \\ \left(\dfrac{\delta\hat{M}}{\delta R_1}\right)^2 & \left(\dfrac{\delta\hat{M}}{\delta R_2}\right)^2 & \left(\dfrac{\delta\hat{M}}{\delta R_3}\right)^2 \\ \left(\dfrac{\delta\hat{\alpha}}{\delta R_1}\right)^2 & \left(\dfrac{\delta\hat{\alpha}}{\delta R_2}\right)^2 & \left(\dfrac{\delta\hat{\alpha}}{\delta R_3}\right)^2 \end{pmatrix}$$

A series of experimental measurements were conducted to test the performance of the maximum-likelihood multiplicity analysis described above. These trials were carried out using a passive neutron counting test rig containing 48 $^3$He neutron detector tubes encased in polythene moderator. The chamber was sufficient to accommodate 200 litre drums and had a neutron detecting efficiency of 15% for an empty drum and a neutron die-away-time of 600m/s. A variety of matrix filled drums were used in conjunction with Pu and $^{252}$Cf standard sources to simulate waste measurements.

In the first set of experimental trials, the reduction in systematic errors (largely due to positional and matrix affects) achieved by multiplicity counting compared with NCC using a $^{252}$Cf standard source to simulate a large quantity of plutonium at various positions within waste matrix filled drums was employed. The specified probability distributions for this analysis were ($\varepsilon$, $\varepsilon_0$, $\varepsilon_+$ = (4%, 10%, 16%), (M, $M_0$, $M_+$) = 1.00, 1.00, 1.20) and ($\alpha$, $\alpha_0$, $\alpha_+$) = 0.00, 0.00, 1.00). These distributions were designed to represent a measurement scenario where possibly large amounts of plutonium were present within a matrix with highly variable neutron moderating and/or absorption properties.

The results of these measurements (3000s count times) are presented in Table 1. The first column of Table 1 gives details of the matrix and the source position for each measurement. The second column shows the measured net (i.e. background corrected) neutron singles, doubles and triples count rates and their associated standard deviations. The third column gives the results of a maximum-likelihood multiplicity analysis of the measured data. The fourth column shows the results that have been obtained from a conventional NCC analysis in which the measured doubles rate is converted directly to a $^{240}$Pu$_{eff}$ mass by means of a calibration factor. In this case, the calibration factor assumes $\varepsilon$ = 10% (i.e. the most likely value of the probability distribution specified for the multiplicity analysis).

TABLE 1

| Measurement Number | Net Count Rates /ε -1 | | Multiplicity Results | NCC Results 240Pu$_{eff}$ / g |
|---|---|---|---|---|
| #1<br>PVC (85kg)<br>source @ B | R1=22773<br>R2=3471<br>R3=269 | +/-3<br>+/-8<br>+/-12 | 240Pu $_{eff}$=132.7g<br>ε= 9.6%<br>M= 1.00<br>α= 0.00 | 100.8g |
| #2<br>PVC (85kg)<br>source @A | R1=20311<br>R2=2778<br>R3=185 | +/-3<br>+/-8<br>+/-13 | 240Pu $_{eff}$=132.0g<br>ε= 8.6%<br>M= 1.00<br>α= 0.00 | 80.6g |
| #3<br>Steel (270kg)<br>source @ B | R1=31861<br>R2=6806<br>R3=686 | +/-4<br>+/-12<br>+/-26 | 240Pu $_{eff}$=132.2g<br>ε= 13.5%<br>M= 1.00<br>α= 0.00 | 197.6g |
| #4<br>Steel (270kg)<br>source @ A | R1=37947<br>R2=9674<br>R3=1315 | +/-4<br>+/-19<br>+/-39 | 240Pu $_{eff}$=132.1g<br>ε= 16.0%<br>M= 1.00<br>α= 0.00 | 280.8g |
| #5<br>PVC (50kg)<br>source @ B | R1=28169<br>R2=5344<br>R3=484 | +/-3<br>+/-12<br>+/-24 | 240Pu $_{eff}$=131.9g<br>ε= 11.9%<br>M= 1.00<br>α= 0.00 | 155.1g |
| #6<br>PVC (50kg)<br>source @ A | R1=33051<br>R2=7348<br>R3=831 | +/-5<br>+/-13<br>+/-28 | 240Pu $_{eff}$=131.9g<br>ε= 14.0%<br>M= 1.00<br>α= 0.00 | 213.3g |
| #7<br>Paper (20kg)<br>source @ B | R1=28105<br>R2=5304<br>R3=511 | +/-5<br>+/-11<br>+/-24 | 240Pu $_{eff}$=132.3g<br>ε= 11.9%<br>M= 1.00<br>α= 0.00 | 153.8g |
| #8<br>Paper (20kg)<br>source @ A | R1=35463<br>R2=8410<br>R3=1091 | +/-39<br>+/-22<br>+/-52 | 240Pu $_{eff}$=132.9g<br>ε= 14.9%<br>M= 1.00<br>α= 0.00 | 244.1g |
| #9<br>Water (105kg)<br>source @ B | R1=20604<br>R2=2856<br>R3=181 | +/-10<br>+/-9<br>+/-13 | 240Pu $_{eff}$=132.1g<br>ε= 8.7%<br>M= 1.00<br>α= 0.00 | 82.9g |
| #10<br>Water (105kg)<br>source @ A | R1=13345<br>R2=1200<br>R3=51 | +/-2<br>+/-5<br>+/-6 | 240Pu $_{eff}$=131.8g<br>ε= 5.7%<br>M= 1.00<br>α= 0.00 | 34.8g |
| #11<br>Polythene (22kg)<br>source @ B | R1=29895<br>R2=6015<br>R3=569 | +/-4<br>+/-11<br>+/-23 | 240Pu $_{eff}$=131.7g<br>ε= 12.7%<br>M= 1.00<br>α= 0.00 | 174.6g |
| #12<br>Polythene (22kg) | R1=34554<br>R2=8004 | +/-21<br>+/-15 | 240Pu $_{eff}$=132.5g<br>ε= 14.6% | 232.4g |

TABLE 1 (continued)

| Measurement Number | Net Count Rates /$\varepsilon$ -1 | | Multiplicity Results | NCC Results 240Pu$_{eff}$ / g |
|---|---|---|---|---|
| source @ A | R3=992 | +/-34 | M= 1.00 $\alpha$= 0.0 | |

The $^{240}$Pu$_{eff}$ masses determined by the two techniques are compared graphically in Figure 5. The arrow bars shown on the multiplicity results have be determined by the maximum-likelihood analysis and include both the systematic and random components. The arrow bars shown on the MC results also include both random and systematic components. The systematic term has been determined by assuming the same probability distribution for the detection efficiencies were specified for the multiplicity analysis and the random term is simply the standard deviation on the measured doubles rate.

The consistently accurate results obtained from the maximum-likelihood MC analysis have been obtained by (correctly) varying $\varepsilon$ (rather than M and $\alpha$) to match the predicted and measured count rates. This is true even in extreme cases such as the measurement number 10 where the source was placed at the centre of a water-filled drum.

In a second set of tests a small Pu source (nominal $^{240}$Pu$_{eff}$ mass = 0.42g) was measured under similar conditions to establish what benefits the maximum-likelihood MC analysis would provide for the measurement of smaller quantities of Pu. The specified probability distributions for the maximum likelihood MC analysis were ($\varepsilon$, $\varepsilon_0$, $\varepsilon_+$ = (10%, 13%, 16%), (M, M$_0$, M$_+$) = 1.00, 1.00, 1.01) and ($\alpha$, $\alpha_0$, $\alpha_+$) = 1.40, 1.70, 2.00). The relatively tight distribution specified for the M reflects the fact that for small quantities of Pu, it is safe to assume that M will be close to unity. The relatively wide distribution specified for $\alpha$ reflects the fact that this parameter will be difficult to estimate for real wastage of variations in chemical composition and impurity content.

The results of these measurements (3000s count times) are presented in Table 2 and a comparison of the $^{240}$Pu$_{eff}$ mass is determined by the maximum-likelihood MC and NCC techniques are illustrated in Figure 6.

TABLE 2

| Measurement Number | Net Count /$\varepsilon$ -1 | Rates | Multiplicity Results | NCC Results 240Pu$_{eff}$ / g |
|---|---|---|---|---|
| #1 PVC (85kg) source @ A | R1=124.34 R2=3.88 R3=0.32 | +/-0.31 +/-0.08 +/-0.05 | 240Pu $_{eff}$=0.40g $\varepsilon$= 10.3% M= 1.00 $\alpha$= 1.93 | 0.26g |
| #2 Wood (48kg) source @ B | R1=125.93 R2=4.50 R3=0.29 | +/-0.34 +/-0.07 +/-0.03 | 240Pu $_{eff}$=0.36g $\varepsilon$= 11.8% M= 1.00 $\alpha$= 1.89 | 0.30g |
| #3 Wood (48kg) source @ A | R1=156.94 R2=7.10 R3=0.69 | +/-0.33 +/-0.10 +/-0.10 | 240Pu $_{eff}$=0.41g $\varepsilon$= 13.8% M= 1.00 $\alpha$= 1.70 | 0.47g |
| #4 PVC (50kg) source @ B | R1=121.46 R2=4.41 R3=0.48 | +/-0.33 +/-0.08 +/-0.14 | 240Pu $_{eff}$=0.38g $\varepsilon$= 11.3% M= 1.00 $\alpha$= 1.76 | 0.29g |
| #5 PVC (50kg) source @ A | R1=159.82 R2=7.09 R3=0.61 | +/-0.34 +/-0.09 +/-0.04 | 240Pu $_{eff}$=0.38g $\varepsilon$= 14.2% M= 1.01 $\alpha$= 1.92 | 0.47g |
| #6 Paper (20kg) source @ B | R1=137.75 R2=5.62 R3=0.47 | +/-0.34 +/-0.07 +/-0.05 | 240Pu $_{eff}$=0.37g $\varepsilon$= 13.0% M= 1.00 $\alpha$= 1.79 | 0.37g |
| #7 Paper (20kg) | R1=173.61 R2=8.77 | +/-0.35 +/-0.10 | 240Pu $_{eff}$=0.39g $\varepsilon$= 15.5% | 0.58g |

TABLE 2   (continued)

| Measurement Number | Net Count $/\varepsilon$ -1 | Rates | Multiplicity Results | NCC Results 240Pu$_{eff}$ / g |
|---|---|---|---|---|
| source @ A | R3=0.86 | +/-0.06 | M= 1.00<br>$\alpha$= 1.83 | |
| #8<br>Polythene (22kg)<br>source @ B | R1=133.44<br>R2=5.22<br>R3=0.66 | +/-0.33<br>+/-0.09<br>+/-0.16 | 240Pu $_{eff}$=0.40g<br>$\varepsilon$= 12.0%<br>M= 1.00<br>$\alpha$= 1.72 | 0.35g |
| #9<br>Polythene (22kg)<br>source @ A | R1=172.47<br>R2=8.09<br>R3=0.84 | +/-0.36<br>+/-0.11<br>+/-0.09 | 240Pu $_{eff}$=0.43g<br>$\varepsilon$= 14.3%<br>M= 1.00<br>$\alpha$= 1.73 | 0.54g |

As can be seen from Figure 6, the maximum-likelihood MC analysis results are again consistently closer to the correct value than the conventional NCC results. This emphasises the ability of the maximum-likelihood technique to find the correct solution to the multiplicity equations without requiring any of the unknown parameters to be specified exactly.

The fact that the arrow bars shown for the MC analysis of the Pu source is significantly larger than those for the $^{252}$Cf measurements reflects the fact that the relative standard deviations on the measured count rates for the far smaller Pu source are significantly greater than those of the $^{252}$Cf source.

A third set of measurements were also made on drums filled with inactive matrices to evaluate the improvement in the limit of detection that would result from the use of the maximum-likelihood analysis technique compared with NCC. Several sets of hour long measurements were performed on the matrix filled drums and similar measurements were made with an empty chamber to determine the ambient background. The net count rates were determined and then analysed by both maximum-likelihood MC and conventional NCC techniques. The specified probability distributions for the maximum-likelihood MC analysis were ($\varepsilon$, $\varepsilon_0$, $\varepsilon_+$ = (10%, 13%, 16%), (M, M$_0$, M$_+$) = 1.00, 1.00, 1.01) and ($\alpha$, $\alpha_0$, $\alpha_+$) = 1.40, 1.70, 2.00).

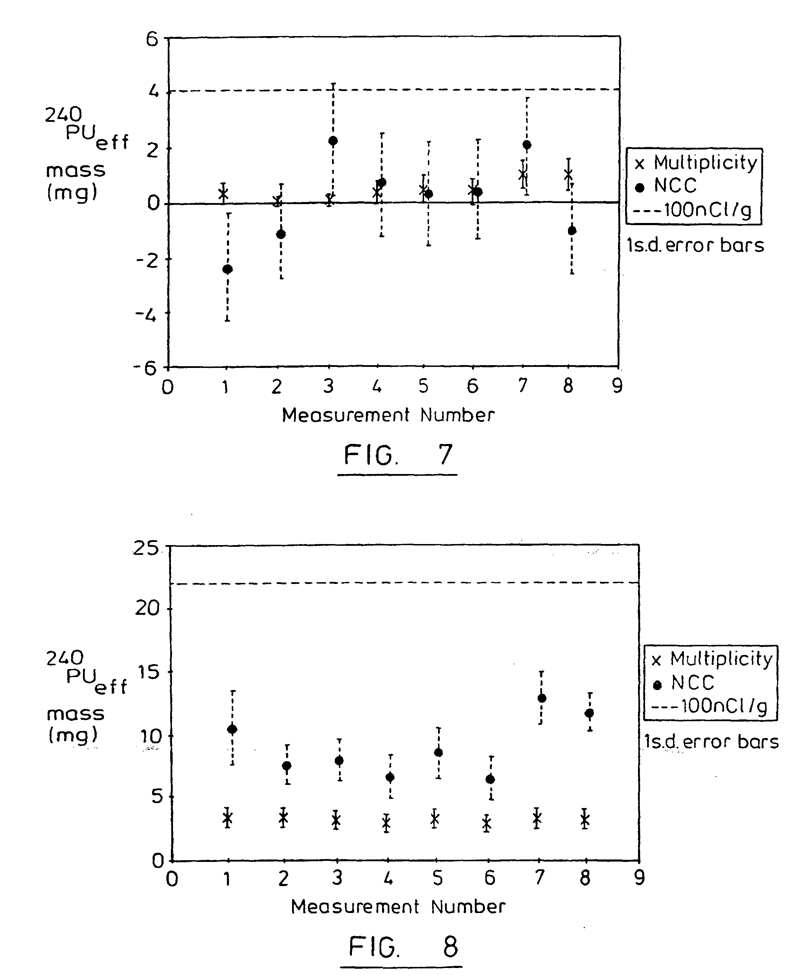

The comparisons of the results obtained from the two techniques are shown graphically in Figure 7 for a drum containing 50kg of scrap PVC and Figure 8 for a drum containing 270kg of steel hulls. Also shown on the graphs is an indication of the TRU/LLW segregation boundary at 100nCi/g (calculated by assuming 94%$^{239}$Pu; 6%$^{240}$Pu).

The NCC results in Figure 7 are scattered either side of zero because they depend solely on the variation in the measured doubles rate from the matrix drum to the empty chain of measurements. The multiplicity results, as discussed earlier, have been constrained to the physically meaningful situation of $^{240}$Pu$_{eff}$ greater or equal to zero. More specifically, the magnitude and the measurement uncertainty on the multiplicity results is consistently less than half that of the NCC results. This translates directly to a limited protection for the maximum-likelihood MC technique which is less than half that of a conventional NCC analysis performed under the same measurement conditions. This improvement over NCC detection limits is as expected given that more useful information is incorporated into the maximum-likelihood MC analysis.

The results as shown in Figure 8 for the drum containing the steel again show reduced measurements uncertainties for the MC results compared with the NCC results, but now show significant positive bias in the assay results as evident despite the evidence of any spontaneous fissile material. Cosmic ray induced neutrons (which are generated primarily in high Z materials) are the likely cause of this affect. At its current level the bias still allows re-categorisation against 100nCi/g LLW limit. This is despite the lack of background shielding on experimental systems without the use of matrix specific background measurements.

The improvement in limit of detection shown in Figures 6 and 7 indicates that the maximum likelihood multiplicity analysis technique will provide a consistent and reliable method for the segregation of TRU/LLW at the 100nCi/g boundary.

The present invention therefore provides a technique whereby the unknown parameters for a waste sample can be determined with far greater accuracy whilst avoiding undue assumptions about the system. In waste investigations accurate Pu mass measurements can be made over the full range of wastes down to and below the 100nCi/g LLW boundary. The result is a more accurate and cost effective monitoring procedure with advantages in inventory control and with significant cost savings in organising waste disposal. The technique allows the low cost and high reliability associated with passive neutron counting systems to be retained. These advantages are obtained despite variations in the make-up of the waste and in the location of the neutron source within that waste. This improved monitoring is backed up by a firm indication of the errors encountered. The parameter envelopes applied to the various functions can be updated as the monitoring of samples progresses. Thus the results from previous samples can improve the modelling of subsequent samples in the waste stream.

**Claims**

1. A method of monitoring a sample containing a neutron source in which:-

   i) signals from a plurality of neutron detectors are analysed and the count rates for single, double and triple incidence of neutrons on the detectors are determined;
   ii) the single, double and triple count rates are equated to a mathematical function related to the spontaneous fission rate, self-induced fission rate, detection efficiency and $\alpha$,n rate;
   iii) a probability distribution is assigned to each of the self-induced fission rate, detection efficiency and $\alpha$,n reaction rate and each of the counting rates to provide a probability distribution factor for any given value;
   iv) and the value of the product of all the probability distribution factors is processed to determine the maximised solution and so provide a value for the spontaneous fission rate which is linked to the mass of the neutron source.

2. A method according to claim 1 in which the signals comprise a series of pulses, each pulse causing a time period to be considered, with other pulses being received in that period being associated with the initial pulse, the number of pulses in the sequence giving the single, double, triple and greater numbers of neutron counts.

3. A method according to claim 1 or claim 2 wherein the singlet count rate is related to the spontaneous fission rate; the self-multiplication factor (m), where

$$m = \frac{1 - p}{1 - p v_1}$$

and p = probability first neutron causes induced fission and $v_I$ is the induced fission factorial moment (for plutonium); the detection efficiency; and the $\alpha$,n reaction rate, by the function:-

$$R_1 = \varepsilon.F_s.M.v_{s1}.(1+\alpha)$$

where $R_1$ is the singlet count rate, $\varepsilon$ is the detector efficiency, $F_s$ is the spontaneous fission rate of the sample, M is the leakage multiplication, $v_{s1}$ is the singlet spontaneous fission factorial moment (for plutonium) and $\alpha$ is the ($\infty$,n) to spontaneous fission ratio.

4. A method according to any preceding claim in which the doublet counting rate is related to the spontaneous fission rate; the self-multiplication factor (m), where

$$m = \frac{1 - p}{1 - p v_1}$$

and p = probability first neutron causes induced fission and $v_I$ is the induced fission factorial moment (for plutonium); the detection efficiency; and the $\alpha$,n reaction rate by the function:-

$$R_2 = \varepsilon^2.F_s.M^2.v_{s2}.\left(1 + (M-1)(1+\alpha)\frac{v_{s1}v_{I2}}{v_{s2}(v_{I1} - 1)}\right)$$

where $R_2$ is the rate of correlated doublets, $\in$ is the detector efficiency, $F_s$ is the spontaneous fission rate of the sample, M is the leakage multiplication, $v_{sn}$ is the nth spontaneous fission factorial moment (for plutonium), $\infty$ is the ($\infty$,n) to spontaneous fission ratio and $V_{In}$ is the nth induced fission factorial moment (for plutonium).

5. A method according to any preceding claim wherein the triplet counting rate is related to the spontaneous fission rate; the self-multiplication factor (m), where

$$m = \frac{1 - p}{1 - pv_1}$$

and p = probability first neutron causes induced fission and $v_l$ is the induced fission factorial moment (for plutonium); the detection efficiency; and the $\alpha$,n reaction rate by the function:-

$$R_3 = \varepsilon^3 . F_s . M^3 . v_{s3} \left( 1 + 2(M - 1)\frac{v_{s2}v_{12}}{v_{s3}(v_{1}-1)} + (M-1)(1 + \alpha)\frac{v_{s1}v_{13}}{v_{s3}(v_{1}-1)}\left( 1 + 2(M-1)\frac{v^2_{12}}{v_{13}(v_{s1}-1)}\right)\right)$$

where $R_3$ is the rate of correlated triplets, $\in$ is the detector efficiency, $F_s$ is the spontaneous fission rate of the sample, M is the leakage multiplication, $V_{s3}$ is the nth spontaneous fission factorial moment (for plutonium), $V_{l3}$ is the nth induced fission factorial moment (for plutonium), $\propto$ is the ($\propto$,n) to spontaneous fission ratio.

6. A method according to any preceding claim in which the probability distribution assigned to individual variables or counting rates is a normal distribution or a flat distribution or a triangular distribution.

7. A method according to claim 6 in which a normal distributions is used for one or more, and most preferably all, the counting rates.

8. A method according to claim 6 or claim 7 in which triangular distributions are used for one or more, and most preferably all, the individual variables, such as detector efficiency, fission rate, multiplication distribution and alpha distribution.

9. A method according to claim 6 or claim7 or claim8 in which a flat distribution is used for the fission rate.

10. A method according to any preceding claim in which the distribution(s) are constrained within certain applied constraints / boundaries, such that the probability distribution factor is zero beyond the constraints or such that the probability distribution factor rapidly tends to zero beyond certain values.

11. A method according to any of claims 6 to 10 in which 15 one or more of the constraints are set according to information gathered from a preceding isotopic consideration or analysis of the sample.

12. A method according to any preceding claim in which the increasing, and preferably maximisation, of the product of the probability distribution factors (pdf's) is preferably performed as an iterative process.

13. Apparatus comprising,

   i) apparatus (2) for monitoring a sample containing a neutron source comprising one or more neutron detectors;
   ii) processing means adapted to receive signals from the detectors;

   and adapted to process the signals to provide a count rate value indicative of the number of single, double and triple incidences of neutrons on the detectors;
   wherein the processing means is adapted to mathematically relate the count rates to the spontaneous fission rate, self-induced fission rate, detection efficiency and $\alpha$,n reaction rate;
   wherein the processing means is adapted to assign a probability distribution to each of the self induced fission rate, detection efficiency and $\alpha$,n reaction rate and the three counting rates; and
   wherein the processing means is adapted to process the value of product of all the probability distribution factors to determine the maximised solution, the maximised solution providing a value proportional to the mass of the neutron source present.

**Patentansprüche**

1.   Verfahren zur Überwachung einer eine Neutronenquelle enthaltenden Probe, bei welchem:

   i) Signale, die von einer Vielzahl von Neutronendetektoren stammen, analysiert werden und die Zählraten für einfaches, zweifaches und dreifaches Auftreffen von Neutronen auf die Detektoren ermittelt werden;

   ii) die einfachen, zweifachen und dreifachen Zählraten einer mathematischen Funktion gleichgesetzt werden, welche sich auf die Rate spontaner Spaltung, die Rate selbstinduzierter Spaltung, den Detektions-Wirkungsgrad und die α,n-Rate bezieht;

   iii) sowohl der Rate selbstinduzierter Spaltung als auch dem Detektions-Wirkungsgrad und der Rate der α,n-Reaktion und jeder der Zählraten eine Wahrscheinlichkeits-Verteilung zugewiesen wird, um einen Wahrscheinlichkeits-Verteilungs-Faktor für jeden gegebenen Wert zur Verfügung zu stellen;

   iv) und der Wert des Produkts aller Wahrscheinlichkeits-Verteilungs-Faktoren verarbeitet wird, um die maximierte Lösung zu bestimmen und so einen Wert für die Rate spontaner Spaltung zur Verfügung zu stellen, welche mit der Masse der Neutronenquelle verknüpft ist.

2.   Verfahren nach Anspruch 1, bei welchem die Signale
   eine Reihe von Pulsen umfassen, wobei jeder Puls eine zu berücksichtigende Zeitspanne hervorruft, wobei andere innerhalb dieser Zeitspanne empfangene Pulse dem Anfangspuls zugeordnet werden und die Anzahl der Pulse innerhalb der Sequenz die einfachen, zweifachen, dreifachen und höheren Anzahlen von Neutronen-Zählungen ergibt.

3.   Verfahren nach Anspruch 1 oder 2, bei welchem die
   Singulett-Zählrate in Bezug gesetzt wird mit der Rate spontaner Spaltung; dem Selbst-Multifikations-Faktor (m), wobei

$$m = \frac{1-p}{1-p\nu_1}$$

   und p = Wahrscheinlichkeit, dass das erste Neutron eine induzierte Spaltung bewirkt, und $\nu_I$ das faktorielle Moment induzierter Spaltung (für Plutonium) ist; dem Detektions-Wirkungsgrad und der Rate der α,n-Reaktion durch die Funktion

$$R_1 = \varepsilon \cdot F_s \cdot M \cdot \nu_{s1} \cdot (1+\alpha)$$

   wobei $R_1$ die Singulett-Zählrate ist, $\varepsilon$ der Detektor-Wirkungsgrad ist, $F_S$ die Rate spontaner Spaltung der Probe ist, M die Leck-Multiplikation ist, $\nu_{s1}$ das faktorielle Moment der n-ten spontanen Spaltung (für Plutonium) ist und $\alpha$ das Verhältnis von (α,n) zur spontanen Spaltung ist.

4.   Verfahren nach einem der vorhergehenden Ansprüche,
   bei welchem die Dublett-Zählrate in Beziehung gesetzt wird mit der Rate spontaner Spaltung; dem Selbst-Multiplikations-Faktor (m), wobei

$$m = \frac{1-p}{1-p\nu_1}$$

   und p = Wahrscheinlichkeit, dass das erste Neutron eine induzierte Spaltung bewirkt, und $\nu_I$ das faktorielle Moment induzierter Spaltung (für Plutonium) ist; dem Detektions-Wirkungsgrad und der Rate der α,n-Reaktion durch die Funktion

$$R_2 = \varepsilon^2 \cdot F_S \cdot M^2 \cdot v_{s2}\left(1 + (M-1)(1+\alpha)\frac{v_{s1}v_{I2}}{v_{s2}(v_{I1}-1)}\right)$$

wobei $R_2$ die Rate korrelierter Dubletts ist, $\varepsilon$ der Detektor-Wirkungsgrad ist, $F_S$ die Rate spontaner Spaltung der Probe ist, M die Leck-Multiplikation ist, $v_{s2}$ das faktorielle Moment der n-ten spontanen Spaltung (für Plutonium) ist, $\alpha$ das Verhältnis von ($\alpha$,n) zur spontanen Spaltung ist und $v_{In}$ das faktorielle Moment der n-ten Spaltung (für Plutonium) ist.

5. Verfahren nach einem der vorhergehenden Ansprüche,
    bei welchem die Triplett-Zählrate in Beziehung gesetzt wird mit der Rate spontaner Spaltung; dem Selbst-Multiplikations-Faktor (m), wobei

$$m = \frac{1\text{-}p}{1\text{-}pv_I}$$

und p = Wahrscheinlichkeit, dass das erste Neutron eine induzierte Spaltung bewirkt und $v_I$ das faktorielle Moment induzierter Spaltung (für Plutonium ist); dem Detektions-Wirkungsgrad und der Rate der $\alpha$,n-Reaktion durch die Funktion

$$R_3 = \varepsilon^3 \cdot F_S \cdot M^3 \cdot v_{s3}\left(1 + 2(M-1)\frac{v_{s2}v_{I2}}{v_{s3}(v_{I1}-1)} + (M-1)(1+\alpha)\frac{v_{s1}v_{I3}}{v_{s3}(v_{I1}-1)}\left(1 + 2(M-1)\frac{v^2_{I2}}{v_{I3}(v_{s1}-1)}\right)\right)$$

wobei $R_3$ die Rate der korrelierten Tripletts ist, $\varepsilon$ der Detektor-Wirkungsgrad ist, $F_S$ die Rate spontaner Spaltung der Probe ist, M die Leck-Multiplikation ist, $v_{s3}$ das faktorielle Moment der n-ten spontanen Spaltung (für Plutonium) ist, $v_{I3}$ das faktorielle Moment der n-ten induzierten Spaltung (für Plutonium) ist und $\alpha$ das Verhältnis von ($\alpha$,n) zur spontanen Spaltung ist.

6. Verfahren nach einem der vorhergehenden Ansprüchen,
    bei welchem die Wahrscheinlichkeits-Verteilung, welche individuellen Variablen oder Zählraten zugewiesen wurde, eine Normalverteilung oder eine flache Verteilung oder eine Dreiecksverteilung ist.

7. Verfahren nach Anspruch 6, bei welchem eine Normalverteilung für eine oder mehrere und am bevorzugtesten für alle Zählraten verwendet wird.

8. Verfahren nach Anspruch 6 oder 7, bei welchem Dreiecksverteilungen für eine oder mehrere und am bevorzugtesten für alle individiuellen Variablen, wie den Detektor-Wirkungsgrad, die Spaltungsrate, die Multiplikations-Verteilung und die alpha-Verteilung, verwendet werden.

9. Verfahren nach einem der Ansprüche 6, 7 oder 8, bei
    welchem eine flache Verteilung für die Spaltungsrate verwendet wird.

10. Verfahren nach einem der vorhergehenden Ansprüche,
    bei welchem die Verteilung(en) innerhalb bestimmter angewendeter Beschränkungen/Grenzen beschränkt ist (sind), derart, dass der Wahrscheinlichkeits-Verteilungs-Faktor jenseits der Beschränkungen Null ist oder der Wahrscheinlichkeits-Verteilungs-Faktor jenseits bestimmter Werte schnell gegen Null strebt.

11. Verfahren nach einem der Ansprüche 6 bis 10, bei
    welchem eine oder mehrere der Beschränkungen entsprechend der Information festgelegt werden, die aufgrund einer vorhergehenden isotopen Betrachtung oder Analyse der Probe gesammelt wurden.

**12.** Verfahren nach einem der vorhergehenden Ansprüche,
bei welchem die Erhöhung und vorzugsweise die Maximierung des Produktes der Wahrscheinlichkeits-Verteilungs-Faktoren (pdf's) vorzugsweise als iterativer Prozess durchgeführt wird.

**13.** Vorrichtung, welche umfasst:

i) eine Vorrichtung (2) zur Überwachung einer eine Neutronenquelle enthaltenden Probe, welche einen oder mehrere Neutronendetektoren umfasst;

ii) Verarbeitungsmittel, welche derart ausgebildet sind, dass sie Signale von den Detektoren empfangen, und welche derart gestaltet sind, dass sie

die Signale verarbeiten, um einen Zählraten-Wert zur Verfügung zu stellen, welcher die Anzahl des einfachen, zweifachen und dreifachen Auftreffens von Neutronen auf die Detektoren wiedergibt; wobei die Verarbeitungsmittel derart ausgebildet sind, dass sie die Zählraten mathematisch mit der Rate spontaner Spaltung, der Rate selbstinduzierter Spaltung, dem Detektions-Wirkungsgrad und der Rate der $\alpha$,n-Reaktion in Beziehung setzen; wobei die Verarbeitungsmittel derart ausgebildet sind, dass sie sowohl der Rate selbstinduzierter Spaltung als auch dem Detektions-Wirkungsgrad und der Rate der $\alpha$,n-Reaktion und den drei Zählraten eine Wahrscheinlichkeits-Verteilung zuweisen; und wobei die Verarbeitungsmittel derart ausgebildet sind, dass sie den Wert des Produktes aller Wahrscheinlichkeits-Verteilungs-Faktoren verarbeiten, um die maximierte Lösung zu ermitteln, wobei die maximierte Lösung einen Wert zur Verfügung stellt, welcher proportional zur Masse der anwesenden Neutronenquelle ist.

**Revendications**

**1.** Procédé de surveillance d'un échantillon contenant une source de neutrons, dans lequel :

i) des signaux provenant d'une pluralité de détecteurs de neutrons sont analysés et les taux de comptage pour l'incidence simple, double et triple de neutrons sur les détecteurs sont déterminés ; ii) les taux de comptage simples, doubles et triples sont ajustés à une fonction mathématique liée au taux de fission spontanée, au taux de fission auto-induite, au rendement de détection et au taux de réaction $\alpha$,n ; iii) une distribution de probabilité est appliquée à chacun du taux de fission auto-induite, du rendement de détection et du taux de réaction $\alpha$,n et à chacun des taux de comptage pour obtenir un coefficient de distribution de probabilité pour une valeur donnée quelconque ; iv) et la valeur du produit de tous les coefficients de distribution de probabilité est traitée afin de déterminer la solution maximisée et obtenir ainsi une valeur pour le taux de fission spontanée qui est liée à la masse de la source de neutrons.

**2.** Procédé selon la revendication 1, dans lequel les signaux comprennent une série d'impulsions, chaque impulsion provoquant une période de temps à prendre en compte, d'autres impulsions reçues dans cette période étant associées à l'impulsion initiale, le nombre d'impulsions dans la séquence donnant les comptages de neutrons simples, doubles, triples et supérieurs.

**3.** Procédé selon la revendication 1 ou la revendication 2, dans lequel le taux de comptage de singulets est lié au taux de fission spontanée; au coefficient d'auto-multiplication (m), où

$$m = \frac{1 - p}{1 - p v_1}$$

et p = probabilité que le premier neutron provoque une fission induite et $V_l$ est le moment factoriel de la fission induite (pour le plutonium); au rendement de détection ; et au taux de réaction $\alpha$,n par la fonction :

$$R_1 = \varepsilon \cdot F_s \cdot M \cdot V_{s1} \cdot (1+\alpha)$$

où $R_1$ est le taux de comptage de singulets, $\varepsilon$ est le rendement du détecteur, $F_s$ est le taux de fission spontanée de l'échantillon, M est la multiplication de fuite, $v_{s1}$ est le moment factoriel des singulets de la n^ième fission spontanée (pour le plutonium) et $\alpha$ est le rapport de $(\alpha,n)$ sur la fission spontanée.

4. Procédé selon l'une quelconque des revendications précédentes, dans lequel le taux de comptage de doublets est lié au taux de fission spontanée ; au coefficient d'auto-multiplication (m), où

$$m = \frac{1 - p}{1 - p v_1}$$

et p = probabilité que le premier neutron provoque une fission induite et $V_I$ est le moment factoriel de la fission induite (pour le plutonium) ; au rendement de détection ; et au taux de réaction $\alpha,n$ par la fonction :

$$R_2 \;=\; \varepsilon^2 \cdot F_s \cdot M^2 \cdot v_{s2} \cdot \left( 1 + (M-1)(1+\alpha)\frac{v_{s1}v_{I2}}{v_{s2}(v_{I1}-1)} \right)$$

où $R_2$ est le taux des doublets corrélés, $\varepsilon$ est le rendement du détecteur, $F_s$ est le taux de fission spontanée de l'échantillon, M est la multiplication de fuite, $V_{sn}$ est le moment factoriel de la n^ième fission spontanée (pour le plutonium), $\alpha$ est le rapport de $(\alpha,n)$ par rapport à la fission spontanée et $V_{In}$ est le moment factoriel de la n^ième fission (pour le plutonium).

5. Procédé selon l'une quelconque des revendications précédentes, dans lequel le taux de comptage de triplets est lié au taux de fission spontanée ; au coefficient d'auto-multiplication (m), où

$$m = \frac{1 - p}{1 - p v_1}$$

et p = probabilité que le premier neutron provoque une fission induite et $V_I$ est le moment factoriel de la fission induite (pour le plutonium) ; au rendement de détection ; et au taux de réaction $\alpha,n$ par la fonction :

$$R_3 \;=\; \varepsilon^3 \cdot F_s \cdot M^3 \cdot v_{s3} \cdot \left( 1 + 2(M-1)\frac{v_{s3}v_{I2}}{v_{s3}(v_{I1}-1)} + (M-1)(1+\alpha)\frac{v_{s1}v_{I3}}{v_{s3}(v_{I1}-1)}\left( 1 + 2(M-1)\frac{v^2_{I2}}{v_{I3}(v_{s1}-1)} \right) \right)$$

où $R_3$ est le taux des triplets corrélés, $\varepsilon$ est le rendement du détecteur, $F_s$ est le taux de fission spontanée de l'échantillon, M est la multiplication de fuite, $V_{sn}$ est le moment factoriel de la n^ième fission spontanée (pour le plutonium), $V_{In}$ est le moment factoriel de la n^ième fission induite (pour le plutonium) et $\alpha$ est le rapport de $(\alpha,n)$ par rapport à la fission spontanée.

6. Procédé selon l'une quelconque des revendications précédentes, dans lequel la distribution de probabilité assignée à des variables ou taux de comptage individuels est une distribution normale ou une distribution plate ou une distribution triangulaire.

7. Procédé selon la revendication 6, dans lequel des distributions normales sont utilisées pour un ou plusieurs, de la façon la plus préférentielle pour tous les taux de comptage.

8. Procédé selon la revendication 6 ou la revendication 7, dans lequel des distributions triangulaires sont utilisées pour une ou plusieurs, de la façon la plus préférentielle pour toutes les variables individuelles telles que le rendement du détecteur, le taux de fission, la distribution de la multiplication et la distribution alpha.

9. Procédé selon la revendication 6 ou la revendication 7 ou la revendication 8, dans lequel une distribution plate est utilisée pour le taux de fission.

10. Procédé selon l'une quelconque des revendications précédentes, dans lequel la ou les distributions sont restreintes à l'intérieur de certaines contraintes / limites appliquées, de façon que le coefficient de distribution de probabilité soit nul au-delà des contraintes ou de façon que le coefficient de distribution de probabilité tende rapidement vers zéro au-delà de certaines valeurs.

11. Procédé selon l'une quelconque des revendications 6 à 10, dans lequel une ou plusieurs des contraintes sont fixées conformément à des informations obtenues à partir d'un examen isotopique ou d'une analyse précédente de l'échantillon.

12. Procédé selon l'une quelconque des revendications précédentes, dans lequel l'augmentation, de préférence la maximisation, du produit des coefficients de distribution de probabilité (cdp) se fait de préférence sous la forme d'un processus itératif.

13. Appareil comprenant,

i) un appareil (2) pour surveiller un échantillon contenant une source de neutrons, comprenant un ou plusieurs détecteurs de neutrons ;
ii) des moyens de traitement adaptés pour recevoir des signaux provenant des détecteurs ;

et adaptés pour traiter les signaux afin de délivrer une valeur de fréquence de comptage indicative du nombre d'incidences simples, doubles et triples de neutrons sur les détecteurs ;
dans lequel les moyens de traitement sont adaptés pour lier mathématiquement les taux de comptage au taux de fission spontanée, au taux de fission auto-induite, au rendement de détection et au taux de réaction $\alpha$,n ;
dans lequel les moyens de traitement sont adaptés pour assigner une distribution de probabilité à chacun du taux de fission auto-induite, du rendement de détection et du taux de réaction $\alpha$,n et aux trois taux de comptage ; et
dans lequel les moyens de traitement sont adaptés pour traiter la valeur du produit de tous les coefficients de distribution de probabilité afin de déterminer la solution maximisée, cette solution maximisée donnant une valeur proportionnelle à la masse de la source de neutrons présente.

FIG. 1

FIG. 2

40

pdf

FIG. 3a

initial estimate
42

d(pdf)/dx

46

next estimate 44

FIG. 3b

pdf

50

FIG. 4a

x

initial estimate 52

54

56

d(pdf)/dx

x

next estimate 58

FIG. 4b

FIG. 5

FIG. 6

FIG. 7

FIG. 8